# EUROPEAN PATENT APPLICATION

(11) **EP 1 020 873 A1**
(43) Date of publication of application: **19.07.2000**
(21) Application number: 99100387.2
(22) Date of filing: 18.01.1999
(51) Int. Cl.: G21C 3/62

(54) **A method for tailoring the density of nuclear fuel pellets**

(71) Applicant: European Community, 2920 Luxembourg (LU)
(72) Inventor: Somers, Joseph, 76133 Karlsruhe (DE); Haas, Didier, 1457 Walhain (BE)
(74) Representative: Weinmiller, Jürgen

(57) **Abstract**

This invention relates to a method for tailoring the density of nuclear fuel pellets so that the local microscopic density of the fuel in a pellet is greater than the overall density of the pellet, the method being based on prefabricated precursor beads.

According to the invention:
a) a defined first quantity of precursor beads containing no Pu is thermally treated under an oxidising atmosphere at a temperature of below 1150°C,
b) a defined second quantity of precursor beads is thermally treated under a reducing atmosphere at a temperature of below 1150°C,
c) said treated first and second quantities are mixed and then pressed into green pellets,
d) these pellets are treated under a reducing atmosphere and a temperature less than 1100°C in order to reduce the overstoechiometric component and then sintered at a temperature above 1600 °C.

During this final step, the material derived from the first quantity converts into a lower oxidation state, thereby reducing its volume and creating microscopic voids which reduce the swelling of the pellets during operation in a reactor.

## Description

This invention refers to the tailoring of the density of nuclear fuel pellets so that the local microscopic density of the fuel in a pellet is greater than the overall density of the pellet, the method being based on prefabricated precursor beads.

The industrial fabrication of oxide nuclear fuel for light water reactors or pressurised water reactors is in general achieved by precipitating feed solutions which result in powders, by pressing these powders to become green pellets and by thermally treating the pellets at elevated temperature under a suitable atmosphere.

As conventional procedures exercise little control over the powder generation, additional powder processing is required. In particular, the necessary milling step results in large quantities of fine powders, which deposit on the walls of the glove box and on the surfaces of the processing equipment in that box. If mixed oxide fuel (MOX) is to be prepared, these deposits can cause a radiation hazard to the personnel. Furthermore, the consequences of these deposits will be exacerbated in future, as older Pu material which has been subjected to numerous irradiation cycles will be used which will have an isotopic distribution such that the radiation dose will be higher.

Most present fabrication routes lead to fuel pins consisting of pellets with relatively uniform density (circa 95% of the theoretical value). Since the present irradiation time to which the fuel can be exposed in the reactor, is determined by the swelling of the fuel and the consecutive interaction with the cladding, it should be useful to tailor the density of the pellets in order to reduce the swelling effect, thereby extending the irradiation period of the fuel pins in the reactor.

Following traditional methods, tailored porosities could be achieved by adding pore formers to the powder, by pressing the mixture and by pyrolysing the pore formers. The main disadvantage of this method lies in the pyrolysis which requires specific atmospheric conditions and must be complete before sintering of the pellets takes place. In addition, the pyrolysis is never complete, thus leaving potentially detrimental residues.

It is thus un object of the present invention to propose a method for reducing the overall density of the pellets to 90% or even less while still maintaining a high local density (about 95%). The high local density is desired in order to avoid sintering effects during irradiation of the fuel in the reactor. This method should further avoid the use of pore formers and their subsequent pyrolysis.

This object is achieved by the method as defined in claim 1. Preferred embodiments of this method are defined in the dependent claims.

The invention will now be described in more detail by means of some preferred embodiments.

According to a first embodiment, fuel pellets are fabricated based uniquely on uranium. Uranyl-nitrate solutions are adjusted to a viscosity of about 0.02 to 0.1 Pas (Pascal sec) by adding trace amounts of long chain organic thickeners such as Methocel, Dextran, Polyvinyl alcohol. The feed solution is dispersed into droplets of selected size, which are then collected in a hydroxide bath. Due to the network formed by the long chain organic polymers, precipitation then occurs within the original droplets, so that nearly spherical beads are formed.

After removal of the nitrate salts and organic polymers, the water content of the beads is reduced by an azeotropic distillation in a suitable immiscible organic solvent or by the application of microwaves to the beads submerged in a liquid which preferably does not absorb microwave energy.

The dimensions of the precursor beads are determined by the solution properties and the type and operating conditions of the droplet disperser. Preferably the beads should have diameters not smaller than 20 µm (to avoid dust problems) and not larger than 300 µm (for good pressing properties). The precursor beads obtained by the above described process are free flowing and dust-free; they do not require any other physical treatment (e.g. milling) prior to pressing. Thus the build-up of dusts in the glove box and consequently harmful radiation levels are avoided. In addition, the beads produced in this way exhibit excellent sintering properties.

A first predetermined quantity of precursor beads is then thermally treated under an oxidising atmosphere (e.g. air, CO₂) at a temperature below 1150°C, preferably below 900°C, while a second predetermined quantity of such beads is treated at the same temperature under a reducing atmosphere (e.g. Ar/H₂). During this treatment uranyl hydroxides in the beads of the first quantity are converted into U₃O₈, while the beads of the second quantity are converted to UO₂.

It is well known that the density of U₃O₈ (ρ = 8300 kg/m³) is lower than that of UO₂ (ρ = 10960 kg/m³).

The next step consists in obtaining green pellets by compressing a mixture of the beads of said first and said second quantity. These pellets are then thermally treated under a reducing atmosphere (e.g. Ar/H₂) at temperatures less than 1100°C, preferably less than 900°C until the U₃O₈ beads in the pellets have converted into UO₂ thereby reducing their volume and creating voids. The pellets are then heated up to a temperature above 1600°C and regions corresponding to the precursor beads sinter to high density, to give a backbone ensuring the mechanical stability of the pellets and at a later stage in the reactor itself. The presence of the voids, however, hinders sintering between neighbouring beads in the pellets. Thus, the voids remain after sintering and pellets with high local densities, but with lower overall density are obtained.

In the case of MOX fuel the invention can be applied in the same way: The Pu material should be present preferably in the beads of the second quantity, so that the stoichiometry is significantly below 2.0 and mixed with U₃0₈ beads of the first quantity. The Pu content of the second quantity should be higher than in the final product fuel and in proportion to the dilution achieved by mixing with uranium. As the theoretical density of U₃O₈ of the first quantity and the Pu containing material of the second quantity are both less than the density of the final product, the thermal treatment applied after pellet pressing results in a material with locally high density but a low overall density. The distribution of the Pu is not homogeneous throughout the pellet,but this is not detrimental to the mechanical stability during irradiation in the reactor.

The invention is not restricted to the methods as described above. Thus, the size and number of the voids can be further controlled by selecting different sizes for the precursor beads of both quantities: Smaller size of the beads of the first quantity increases the number of voids, larger size of these beads increases the size of the voids.

The invention therefore provides nuclear fuel pellets having a reduced overall density which enhances stability against swelling during service in the reactor, but having a backbone structure of high density which avoids further sintering of the pellets during service. As a result, a fuel pin containing such pellets supports a higher burn-up rate than conventionally equipped fuel pins.

## Claims

1. A method for tailoring the density of nuclear fuel pellets so that the local microscopic density of the fuel in a pellet is greater than the overall density of the pellet, the method being based on prefabricated precursor beads,
characterized in that
a) a defined first quantity of precursor beads containing no Pu is thermally treated under an oxidising atmosphere at a temperature of below 1150 °C,
b) a defined second quantity of precursor beads is thermally treated under a reducing atmosphere at a temperature less than 1150 °C,
c) said treated first and second quantities are mixed and then pressed into green pellets,
d) these pellets are treated under a reducing atmosphere and a temperature less than 1100°C and then sintered at a temperature above 1600 °C.

2. A method according to claim 1, characterized in that the second quantity contains both uranium and plutonium.

3. A method according to any one of the preceding claims, characterized in that the precursor beads of the first and the second quantity differ in size.
